# EUROPEAN PATENT APPLICATION

(11) **EP 2 426 752 A2**
(43) Date of publication of application: **07.03.2012**
(21) Application number: 11179523.3
(22) Date of filing: 31.08.2011
(51) Int. Cl.: H01M 2/02, H01M 2/04, H01M 2/12, H01M 10/04, H01M 10/42

(54) **Rechargeable battery**

(30) Priority: 01.09.2010 US 344619 P; 01.06.2011 US 150704
(71) Applicant: SB LiMotive Co., Ltd., Giheung-gu Yongin-si, Gyeonggi-do 446-711 (KR)
(72) Inventor: Kim, Duk-Jung, 446-711 Yongin-Si (KR); Kim, Joong-Heon, 446-711 Yongin-si (KR)
(74) Representative: Gulde Hengelhaupt Ziebig & Schneider

(57) **Abstract**

The present invention is directed to a rechargeable battery comprising an electrode assembly, a case accommodating the electrode assembly, and a retainer in the case and surrounding the electrode assembly. The retainer includes a first retainer surrounding one portion of the electrode assembly, a second retainer surrounding another portion of the electrode assembly, and a connecting portion connecting the first retainer and the second retainer.

## Description

### BACKGROUND

### 1. Field

The described technology relates generally to a rechargeable battery with an improved structure in which an electrode assembly is built in a case.

### 2. Description of the Related Art

Unlike a primary battery, a rechargeable battery can repeatedly perform charging and discharging. A small-capacity rechargeable battery is used in a portable small-sized electronic device such as a mobile phone, a notebook computer, and a camcorder and a large-capacity rechargeable battery may be used as a power supply for driving a motor such as a hybrid vehicle.

Recently, a high power rechargeable battery using a non-aqueous electrolyte having a high energy density has been developed. The high power rechargeable battery is configured by connecting the plurality of rechargeable batteries in series, which may be used to drive the motor for a device requiring large power, for example, an electric vehicle, or the like.

The rechargeable battery includes an electrode assembly formed to include a positive electrode and a negative electrode formed on both surfaces of a separator, a case in which the electrode assembly is built, a cap plate closing an opening of the case, and an electrode terminal electrically connected to the electrode assembly penetrating through the cap plate.

The charging and discharging is repeated in the electrode assembly, such that an excessive heat is generated or an electrolyte solution is decomposed. Therefore, a gap among the positive electrode, the separator, and the negative electrode is expanded and the electrode assembly is swollen. Consequently, a cell swelling is generated.

The above information disclosed in this background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery having advantages of suppressing a cell swelling by keeping a gap among a positive electrode, a separator, and a negative electrode within a predetermined range by pressing an electrode assembly.

Further, the present invention has been made in an effort to provide a rechargeable battery having advantages of improving the electrode assembling performance of a case and an electrode assembly by surrounding the electrode assembly with the retainer, preventing the movement of the electrode assembly in the case, and preventing the damage of the electrode assembly at the cap plate side.

An exemplary embodiment of the present invention provides a rechargeable battery, comprising an electrode assembly; a case accommodating the electrode assembly; and a retainer in the case and surrounding the electrode assembly, wherein the retainer includes a first retainer surrounding one portion of the electrode assembly, a second retainer surrounding another portion of the electrode assembly, and a connecting portion connecting the first retainer and the second retainer. The rechargeable battery may be prismatic, but the invention is not limited to a prismatic form.

Preferably the battery further comprises a current collecting lead tab, the current collecting lead tab electrically connecting the electrode assembly with a terminal of the rechargeable battery. Preferably the first retainer includes a bottom portion, a first pressing portion extending vertically from the bottom portion, a second pressing portion extending vertically from the bottom portion, the second pressing portion facing the first pressing portion, a first confining portion extending vertically from the bottom portion, the first confining portion being between ends of the first pressing portion and the second pressing portion, and a second confining portion extending vertically from the bottom portion, the second confining portion facing the first confining portion. Preferably the second retainer includes a lid portion, the lid portion supporting an upper end of the electrode assembly, a third pressing portion extending vertically from the lid portion, a fourth pressing portion extending vertically from the lid portion, the fourth pressing portion facing the third pressing portion, a third confining portion extending vertically from the lid portion, the third confining portion being between ends of the third pressing portion and the fourth pressing portion, and a fourth confining portion extending vertically from the lid portion, the fourth confining portion facing the third confining portion. Preferably the battery further comprises a cap plate, the cap plate being coupled to an upper end of the case to seal the case and wherein the lid portion of the second retainer includes a bending portion between the cap plate and the electrode assembly. Preferably the bending portion of the second retainer has a semicircular corrugated structure. Preferably the lid portion of the second retainer further includes a through hole therein, the cap plate includes a vent plate, and the vent plate is above the through hole of the lid portion. Preferably the first retainer is spaced apart from the second retainer.

Preferably the battery further comprises a cap plate, the cap plate being coupled to an upper end of the case to seal the case. Preferably the connecting portion extends across a space between the first and second retainers. Preferably the connecting portion is integrally formed with one of the first retainer and the second retainer. Preferably the battery further comprises a detachable coupling between the connecting portion and at least one of the first and second retainers. Preferably the detachable coupling includes a coupling hole and a coupling protrusion. Preferably at least one of the first retainer and the second retainer includes a rib on an inner surface thereof. Preferably the battery further comprises a current collecting lead tab, the current collecting lead tab electrically connecting the electrode assembly with a terminal, and wherein the rib supports electrode assembly bonding portions of the current collecting lead tab.

Preferably the electrode assembly is spirally wound and includes a coated portion and an uncoated portion, the uncoated portion being at ends of the coated portion. Preferably a lid portion of the second retainer extends parallel to the coated portion of the electrode assembly. Preferably a bending portion of the lid portion contacts the coated portion of the electrode assembly. Preferably the second retainer further includes an opening portion at opposite ends thereof, the opening portion exposing a portion of the electrode assembly. Preferably the retainer is formed from an insulating resin.

An exemplary embodiment provides a rechargeable battery, including: an electrode assembly including a positive electrode and a negative electrode formed on both surfaces of a separator, a case building the electrode assembly, a cap plate coupled with an opening of a case, and a retainer supported to the case by surrounding the electrode assembly.

According to the exemplary embodiment, the retainer surrounding the electrode assembly is supported to the case to press the electrode assembly. That is, the gaps between the positive electrode, the separator, and the negative positive in the electrode assembly are kept within the predetermined range, thereby making it possible to suppress the cell swelling.

Since the retainer surrounds the electrode assembly, the working of inserting the electrode assembly in the case is facilitated. That is, the present invention can improve the assembling performance of the electrode assembly and the case without damaging the outer surface of the electrode assembly.

The retainer surrounding the electrode assembly is filled in the gap between the electrode assembly and the case, such that the electrode assembly is fixed within the case. That is, the retainer prevents the movement of the electrode assembly in the case.

The retainer is disposed between the electrode assembly and the cap plate to block or mitigate the impact between the electrode assembly and the cap plate. That is, the present invention can prevent the damage of the electrode assembly that may be generated by colliding with the cap plate.

### BRIEF DESCRIPTION OF THE DRAWINGS

FIG. 1 is a perspective view of a prismatic rechargeable battery according to a first exemplary embodiment;
FIG. 2 is a perspective view of a state of assembling an electrode assembly, a cap plate, and a retainer in the rechargeable battery of FIG. 1;
FIG. 3 is an exploded perspective view of the retainer shown in FIG. 2;
FIG. 4 is a cross-sectional view taken along line IV-IV of FIG. 1;
FIG. 5 is a cross-sectional view taken along line V-V of FIG. 4;
FIG. 6 is a cross-sectional view of a state in which a negative current collecting lead tab and the retainer are coupled with each other in an electrode assembly;
FIG. 7 is a cross-sectional view taken along line VII-VII of FIG. 1;
FIG. 8 is a cross-sectional view taken along line VIII-VIII of FIG. 1;
FIG. 9 is a cross-sectional view of a prismatic rechargeable battery according to a second exemplary embodiment; and
FIG. 10 is an exploded perspective view of a retainer applied to a rechargeable battery shown in FIG. 9.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

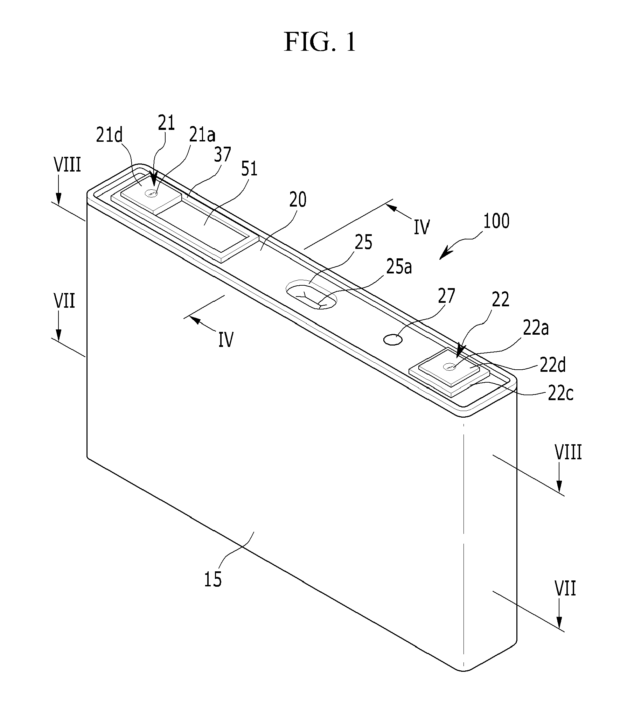

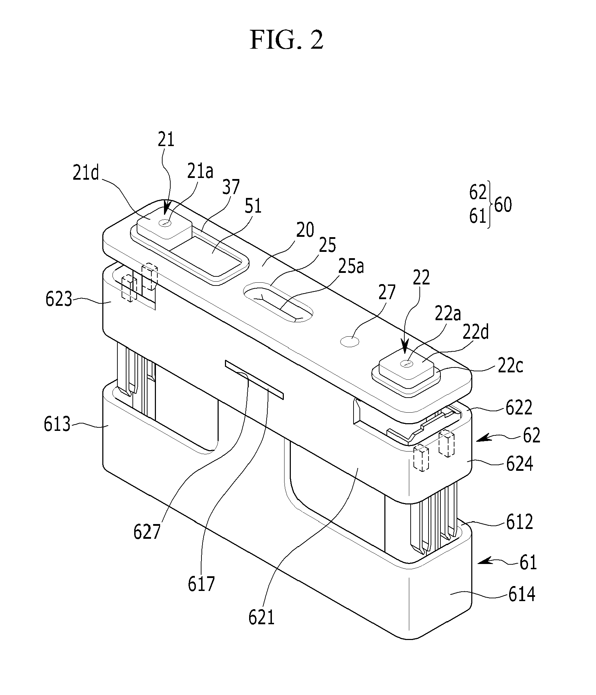

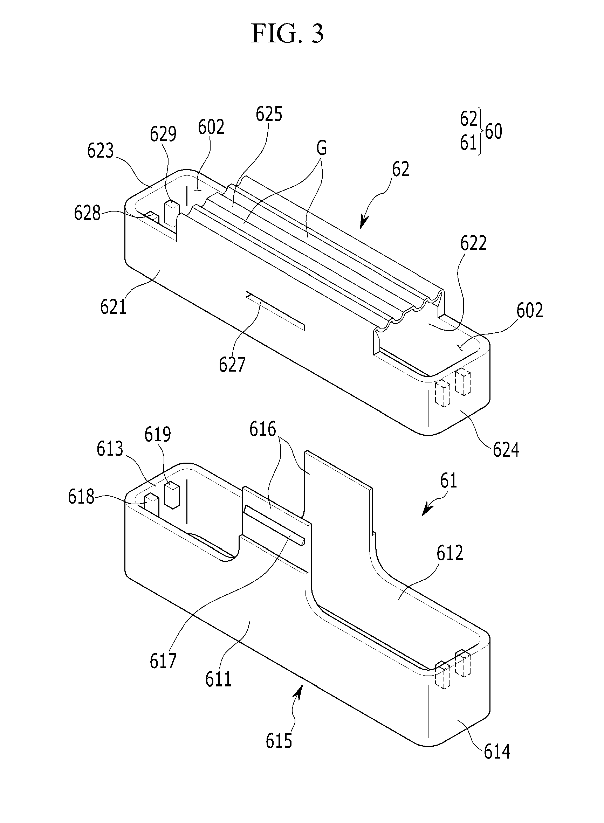

FIG. 1 is a perspective view of a prismatic rechargeable battery 100 according to a first exemplary present embodiment, FIG. 2 is a perspective view of a state of assembling an electrode assembly 10, a cap plate 20, and a retainer 60 among a rechargeable battery 100 of FIG. 1, and FIG. 3 is a perspective view of the retainer 60 shown in FIG. 2.

Referring to FIGS. 1 to 3, the prismatic rechargeable battery 100 according to the exemplary embodiment is formed by assembling the electrode assembly 10 in the cap plate 20 and inserting it into the case 15 by surrounding the electrode assembly 10 with the retainer 60 and then, coupling the cap plate 20 with the case 15.

For example, the retainer 60 is formed by coupling a first retainer 61 (hereinafter, referred to as a "lower retainer") pressing and surrounding the lower of the electrode assembly 10 and a second retainer 62 (hereinafter, referred to as an "upper retainer") pressing and surrounding the upper portion of the electrode assembly 10.

The retainer 60 may be made of a synthetic resin material having electrical isolation. The electrode assembly 10 is inserted into the case 15 in the state where it is surrounded by the retainer 60, such that it may be protected from damage from the opening of the case 15. Prior to describing in detail the retainer 60, components other than the retainer 60 in the rechargeable battery 100 will be described.

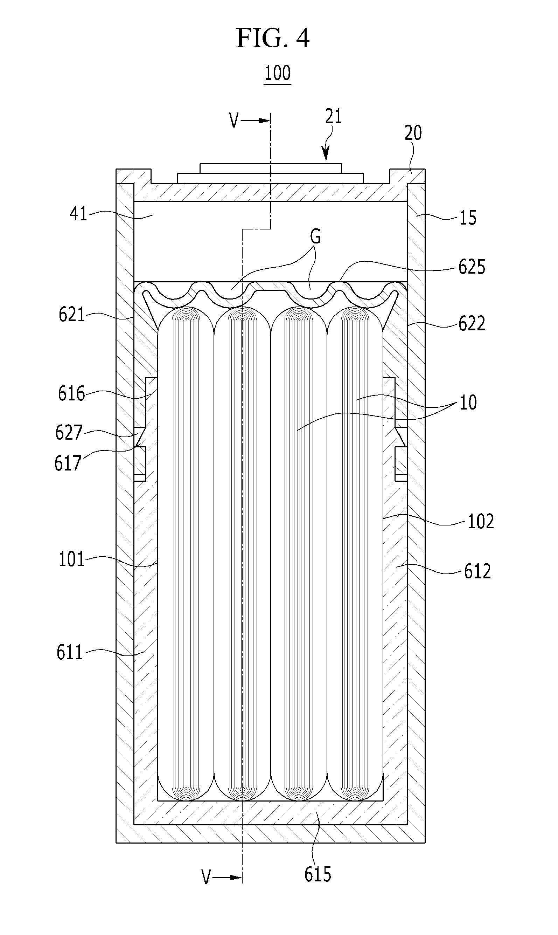

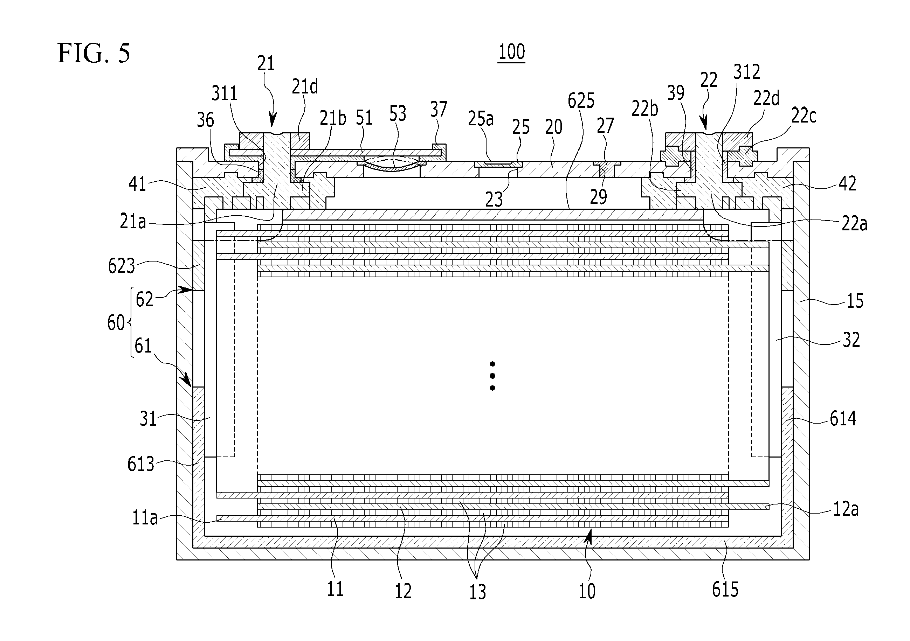

FIG. 4 is a cross-sectional view taken along line IV-IV of FIG. 1 and FIG. 5 is a cross-sectional view taken along line V-V of FIG. 4.

Referring to FIGS. 4 and 5, the prismatic rechargeable battery 100 according to the first exemplary embodiment includes the electrode assembly 10 that performs charging and discharging, the case 15 in which the electrode assembly 10 is built, the cap plate 20 coupled with the opening of the case 15, and the first electrode terminal 21 (hereinafter, referred to as a "negative terminal') installed in the cap plate 20, and the second electrode terminal 22 (hereinafter, referred to as a "positive terminal"). The electrode assembly 10 may be formed in one or plural and the retainer 60 is built in the case 15 by surrounding the electrode assembly 10.

The rechargeable battery 100 according to the first exemplary embodiment shows a square type lithium ion rechargeable battery. However, the present invention is not limited to the first exemplary embodiment and may be applied to various types of rechargeable batteries such as, a lithium polymer rechargeable battery, a cylindrical rechargeable battery, or the like.

Referring to FIG. 5, the electrode assembly 10 disposes the negative electrode 11 and the positive electrode 12 on both surfaces of the insulator, the separator 13, and is formed by winding the negative electrode 11, the separator 13, and the positive electrode 12 in a jelly roll state.

In addition, the electrode assembly may be assembled by stacking the positive electrode and the negative electrode formed of a single plate, putting the separator therebetween or may be assembled by folding and stacking the negative electrode, the separator, and the positive electrode in a zigzag structure (not shown).

The negative electrode 11 and the positive electrode 12 each include a coating portion formed by applying a current collector of a metal thin plate with an active material and non-coated portions 11 a and 12a formed as a current collector exposed by not applying the active material. The coating portions 11a and 12a are each disposed at both ends of the wound electrode assembly 10.

In the first exemplary embodiment, the electrode assembly 10 is formed in plural. Therefore, in the electrode assembly 10, each of the negative electrodes 11 are electrically connected to each other through a negative current collecting lead tab 31 wound to the non-coating portion 11 a and the positive electrodes 12 are electrically connected to each other through a positive current collecting lead tab 32 wound to the non-coating portion 12a. Although not shown, the present invention can be applied to the rechargeable battery in which the electrode assembly is formed in one.

The case 15 is formed of a substantially rectangular parallelepiped to form a space receiving an electrode assembly 10 surrounded by a retainer 60 and the electrolyte therein, wherein the opening connecting the inner space to the outside is formed on one surface of the rectangular parallelepiped shape. The opening may insert the electrode assembly 10 into the case 15.

The cap plate 20 is formed of a thin board to be installed in the opening of the case 15, thereby sealing the case 15. The cap plate 20 further includes an electrolyte solution injection hole 29 and a vent hole 24. The electrolyte solution injection hole 29 can inject the electrolyte solution into the case 15 after coupling the cap plate 20 with the case15. After injecting the electrolyte solution, the electrolyte solution injection hole 29 is sealed with a sealing closure 27.

The vent hole 24 can discharge the internal pressure of the rechargeable battery 100 and is sealed with the vent plate 25. When the internal pressure of the rechargeable battery 100 reaches the predetermined pressure, the vent plate 25 is opened. The vent plate 25 has a notch 25a inducing an open.

The negative terminal 21 and the positive terminal 22 are installed to penetrate through the cap plate 20 to be electrically connected to the electrode assembly 10. That is, the negative terminal 21 and the positive terminal 22 are electrically connected to the negative electrode 11 and the positive electrode 12 of the electrode assembly 10, respectively. Therefore, the electrode assembly 10 is drawn out to the outside of the case 15 through the negative terminal 21 and the positive terminal 22.

The negative terminal 21 and the positive terminal 22 includes column portions 21a and 22a mounted on terminal holes 311 and 312, respectively, formed on the cap plate 20, flanges 21 b and 22b formed on the column portions 21 a and 22a in the case 15, and terminal plates 21 d and 22d disposed at the outside of the case 15 to be coupled with the column portions 21 a and 22a.

The terminal plates 21d and 22d are connected to terminal plates (not shown) of other adjacent rechargeable batteries by a bus bar (not shown), such that the rechargeable batteries 100 may be connected to each other in series or in parallel.

The column portion 22a of the positive terminal 22 may be further stacked with the top plate 22c between the cap plate 20 and the terminal plate 22d. The top plate 22c forms an external short-circuit path through which the external short-circuit portions (as will be described below) are connected to each other in the terminal plate 22d.

At the negative terminal 21, a negative gasket 36 is installed between the column portion 21a of the negative terminal 21 and the inner surface of a terminal hole 311 of the cap plate 20 to seal between the column portion 21 a of the negative terminal 21 and the terminal hole 311 of the cap plate 20. In addition, the negative electrode gasket 36 is further installed to be extended between the flange 21 b and the cap plate 20 to further seal between the flange 21 b and the cap plate 20. That is, the native gasket 36 prevents the electrolyte solution from being leaked through the terminal hole311 by installing the negative terminal 21 in the cap plate 20.

At the positive terminal 22, the positive gasket 39 is installed between the column portion 22a of the positive terminal 22 and the inner surface of the terminal hole 312 of the cap plate 20 to seal between the column portion 22a of the positive terminal 22 and the terminal hole 312 of the cap plate 20. The positive gasket 39 is further installed to be extended between the flange 22b and the cap plate 20 to further seal between the flange 22b and the cap plate 20.

In addition, the positive gasket 39 is further installed to be extended between the column portions 22a of the positive terminal 22 and the inner surface of the hole of the top plate 22c to seal between the column portion 22a of the positive terminal 22 and the inner surface of the hole of the top plate 22c. That is, the positive gasket 39 prevents the electrolyte solution from being leaked through the terminal hole 312 by installing the positive terminal in the cap plate 20.

The negative current collecting lead tab 31 and the positive current collecting lead tab 32 electrically connect the negative terminal 21 and the positive terminal 22 to the negative electrode 11 and the positive electrode 12 of the electrode assembly 10, respectively. That is, the negative current collecting lead tab 31 and the positive current collecting lead tab 32 are coupled with the lower ends of the column portions 21 a and 22a, respectively to coke the lower ends thereof, such that the they are connected to the lower end of the column portions 21 a and 21 b while being supported to the flanges 21 b and 22b.

The negative current collecting lead tab 31 and the positive current collecting lead tab 32 have the same structure. Therefore, the description of the positive current collecting lead tab 32 will be omitted and the structure in which the negative current collecting lead tab 31 is connected to the four electrode assemblies 10 will be described by way of example.

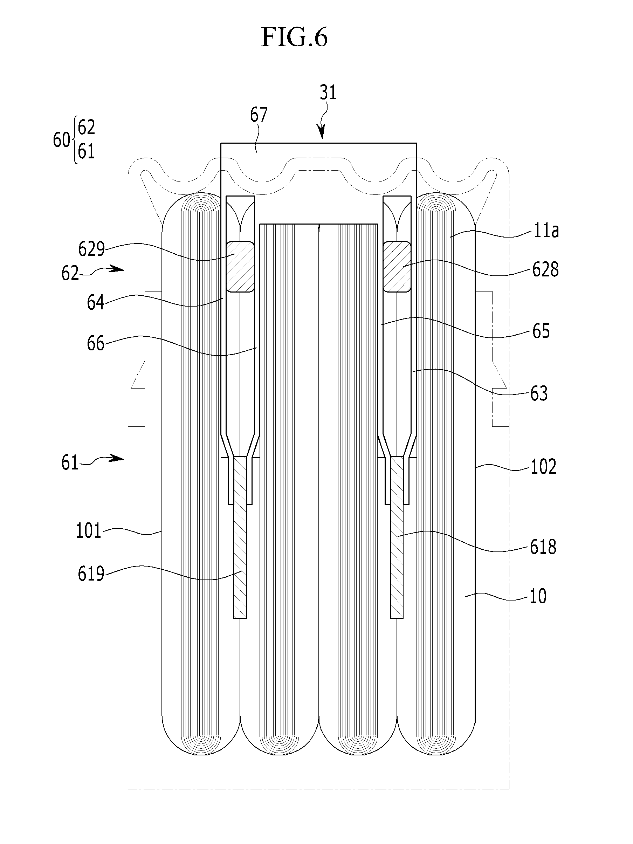

FIG. 6 is a cross-sectional view of a state in which a negative current collecting lead tab 31 and the retainer 60 are coupled with each other in an electrode assembly 10. Referring to FIG. 6, the negative current collecting lead tab 31 includes a branch portion 67 connected to the negative terminal 21 and first, second, third, and fourth electrode assembly bonding portions 63, 64, 65 and 66 inserted between the electrode assemblies 10 by being extended downward from the branch portion 67.

The rechargeable battery 100 according to the first exemplary embodiment includes four electrode assemblies 10, which are arranged to be stacked in parallel. Therefore, the first, second, third, and fourth electrode assembly bonding portions 63, 64, 65 and 66 are disposed in parallel with each other.

The first electrode assembly bonding portion 63 and the second electrode assembly bonding portion 64 are bent at both ends of the branch portion 67 to extend to the lower end of the electrode assembly 10. The third electrode assembly bonding portion 65 and the fourth electrode assembly bonding portion 66 are bent in parallel at the branch portion 67 of the first and second electrode assembly bonding portion 63 and 64 to be extended to the lower end of the electrode assembly 10.

Four electrode assemblies 10 are disposed to overlap with each other and each non-coating portion 11 a and 12a is formed at both ends. In FIG. 6, the non-coating portions 11 a of the negative electrode 11 has a smaller thickness than that of the coating portion coated with the active material, such that the space is formed between the non-coating portions 11 a. Therefore, first, second, third, and fourth electrode assembly bonding portions 63, 64, 65 and 66 are each installed to be inserted into a space between the non-coating portions 11 a, such that they are bonded to the non-coating portion 11 a by an ultrasonic welding.

Referring back to FIG. 5, the negative insulating member 41 is installed between the negative current collecting lead tab 31 and the cap plate 20 and the positive insulating member 42 is installed between the positive current collecting lead tab 32 and the cap plate 20. Therefore, the negative current collecting lead tab 31 and the positive current collecting lead tab 32 are electrically insulated from the cap plate 20.

The rechargeable battery 100 according to the first exemplary embodiment includes the external short-circuit portion, which short-circuits the negative electrode 11 and the positive electrode 12 from the outside of the case 15, at the negative terminal 21 when the internal pressure is increased. For example, the external short-circuit portion includes a short-circuit tab 51 and a short-circuit member 53 that are spaced and short-circuited according to the internal pressure.

The short-circuit tab 51 is electrically connected to the negative terminal 21 and is disposed on the cap plate 20 through the insulating member 37. The short-circuit tab 51 is electrically connected to the terminal plate 21 d stacked while penetrating through the column portion 21 a from the outside of the case 15.

The short-circuit member 53 is installed in the short-circuit hole 23 formed in the cap plate 20 to be electrically connected to the positive terminal 22. Therefore, the short-circuit member 53 maintains the spaced state (state shown in a solid line) from the short-circuit tab 51 at the time of a normal state and contacts the short-circuit tab 51 (see FIG. 5) by being deformed (state shown in a virtual line) when the internal pressure is increased due to the overcharging. That is, the negative electrode 11 and the positive electrode 12 of the electrode assembly 10 may be short-circuited from each other at the outside of the case 15. Large current instantly flows between the negative terminal 21 and the positive terminal 22 through the short-circuit tab 51 and the short-circuit member 53 and the cap plate 20 when they are short-circuited. Thereby, the electrode assembly 10 is discharged.

The retainer 60 will be described again with reference to FIGS. 2 to 5. Referring to FIG. 2, the lower retainer 61 is formed to receive and press the electrode assembly 10 at the lower portion of the electrode assembly 10, that is, at the opposite side of the negative terminal 21 and the positive terminal 22.

Referring to FIG. 4, the lower retainer 61 presses both surfaces (hereinafter, referred to as 'front surface 101 and rear surface 102') from the lower portion of the electrode assembly 10 to suppress the swelling and confines the negative current collecting lead tab 31 and the positive current collecting lead tab 32 to suppress the movement of the electrode assembly 10 due to the external impact.

Referring to FIGS. 2 and 3, the lower retainer 61 includes a bottom portion 615 that is received in the case 15 to support the lower end of the electrode assembly 10, a first pressing portion 611 that is vertically formed at the side of the bottom portion 615 to press the front surface 101 and the rear surface 102 of the electrode assembly 10, a second pressing portion 612, a first confining portion 613 that confines the negative current collecting lead tab 31, and a second confining portion 614 that confines the positive current collecting lead tab 32.

Referring to FIGS. 3 and 4, the extending portions 616 are further formed on each of the upper portions of the first and second pressing parts 611 and 612 and further press the front surface 101 and the rear surface 102 of the electrode assembly 10. The extending portion 616 includes the coupling protrusion 617 to be coupled with the coupling hole 627 of the upper retainer 62.

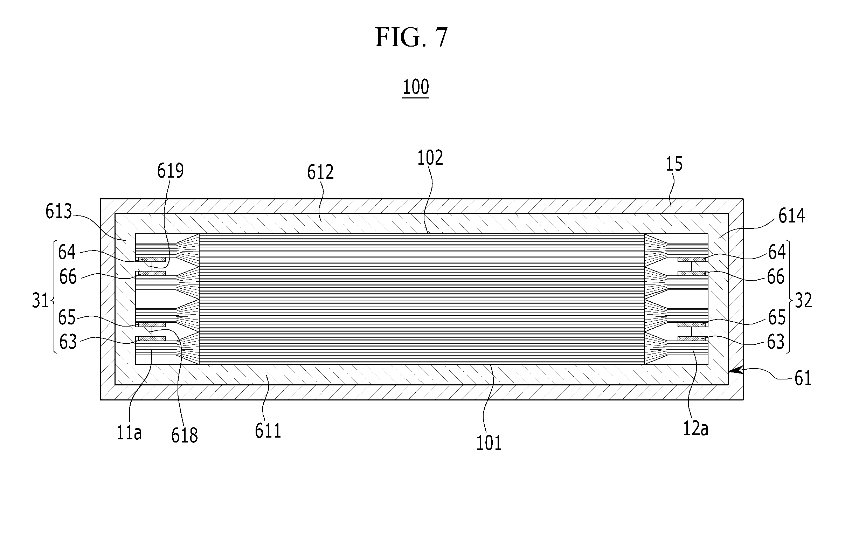

FIG. 7 is a cross-sectional view taken along line VII-VII of FIG. 1. The negative current collecting lead tab 31 and the lower retainer 61 will be described with reference to FIGS. 3, 6, and 7. A first confining portion 613 includes ribs 618 and 619 that are protruded inwardly to be extended vertically.

The ribs 618 and 619 are each interposed between the first and third electrode assembly bonding portions 63 and 65 and between the second and fourth electrode assembly bonding portions 64 and 66 to support the negative current collecting lead tab 31 of the electrode assembly 10. In addition, the ribs 618 and 619 provide the mechanical rigidity to the lower retainer 61.

The lower retainer 61 is interposed between the electrode assembly 10 and the case 15 to receive the lower portion of the electrode assembly 10 to press the electrode assembly 10 and confines the negative current collecting lead tab 31 and the positive current collecting lead tab 32 to be supported to the case 15.

The coupling structure of the first confining portion 613 and the negative current collecting lead tab 31 are the same as the coupling structure of the second confining portion 614 and the positive current collecting lead tab 32. Therefore, the description of the coupling structure of the second confining portion 614 and the positive current collecting lead tab 32 will be omitted.

The first and second confining portions 613 and 614 of the lower retainer 61 are interposed between the lower portion of the electrode assembly 10 and the case 15, and then limit the movement of the electrode assembly 10 at the lower portion thereof.

Referring to FIG. 2, the upper retainer 62 is formed so that it is coupled with the lower retainer 61 to cover and press the upper portion of the electrode assembly 10, that is, the electrode assembly 10at the negative terminal 21 and the positive terminal 22.

Referring to FIG. 4, the upper retainer 62 presses the front surface 101 and the rear surface 102 from the upper portion of the electrode assembly 10 to suppress the swelling, confines the negative current collecting lead tab 31 and the positive current lead tab 32 to suppress the movement of the electrode assembly 10 due to the external impact, and protects the upper surface of the electrode assembly 10 from the negative insulating member 41 and the positive insulating member 42 and guides the movement of gas generated therein.

Referring to FIGS. 2 and FIG. 3, the upper retainer 62 includes a lid portion 625 that is received in the case 15 to support the upper end of the electrode assembly 10, a third pressing portion 621 that is vertically formed at the side of the lid portion 625 to press the front surface 101 and the rear surface 102 of the electrode assembly 10, a fourth pressing portion 622, a third confining portion 623 that confines the negative current collecting lead tab 31, and a fourth confining portion 624 that confines the positive current collecting lead tab 32.

Referring to FIGS. 3 and FIG. 4, third and fourth pressing portions 621 and 622 are each connected to the first and second pressing portions 611 and 612 to press the front surface 101 and the rear surface 102 of the electrode assembly 10. Each of the third and fourth pressing portions 621 and 622 includes the coupling hole 627 to be coupled the coupling protrusion 617 of the extending portion 616, thereby enclosing the electrode assembly 10 by integrally connecting the upper and lower retainers 62 and 61.

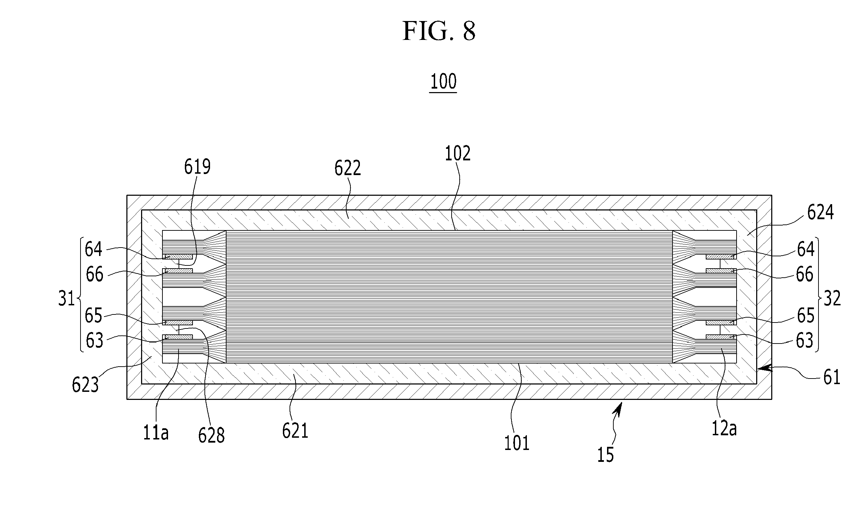

FIG. 8 is a cross-sectional view taken along line VIII-VIII of FIG. 1. The negative current collecting lead tab 31 and the upper retainer 62 will be described with reference to FIGS. 3, 6, and 8. The third confining portion 623 includes ribs 628 and 629 that are protruded inwardly to be extended vertically.

The ribs 628 and 629 are each interposed between the first and third electrode assembly bonding portions 63 and 65 and the second and fourth electrode assembly bonding portions 64 and 66, respectively, to support the negative current collecting lead tab 31 of the electrode assembly 10. In addition, the ribs 628 and 629 provide the mechanical rigidity to the upper retainer 62.

The upper retainer 62 is interposed between the electrode assembly 10 and the case 15 to cover and press the electrode assembly 10 to be supported to the case 15, while receiving the upper portion of the electrode assembly 10.

The coupling structure of the third confining portion 623 and the negative current collecting lead tab 31 is the same as the coupling structure of the fourth confining portion 624 and the positive current collecting lead tab 32. Therefore, the description of the coupling structure of the fourth confining portion 624 and the positive current collecting lead tab 32 will be omitted.

The third and fourth confining portions 623 and 624 of the upper retainer 62 are interposed between the upper portion of the electrode assembly 10 and the case 15 to confine the movement of the electrode assembly 10 at the upper portion thereof.

Referring to FIGS. 3 and FIG. 6, the lid portion 625 forms the bending portion G between the cap plate 20 and the electrode assembly 10 to guide the gas generated therein to the upper portion thereof. In addition, the lid portion 625 and the bending portion G absorb the impact transferred to the electrode assembly 10 through the cap plate 20 to protect the electrode assembly 10.

The lid portion 625 is extended between the electrode assembly 10 and the negative insulating member 41 and the positive insulating member 42 of the electrode assembly 10 to absorb the external impact transferred from the negative insulating member 41 and the positive insulating member 42 to prevent the electrode assembly 10 from being damaged by the negative insulating member 41 and the positive insulating member 42.

As described above, in the rechargeable battery 100 of the first exemplary embodiment, the retainer 60 forms the opening portion 602 between the first and second pressing portions 611 and 612 of the lower retainer 61, the third and fourth pressing portions 621 and 622 of the first and second confining portions 613 and 614 and the upper retainer 62, and the third and fourth confining portions 623 and 624.

The opening portion 602 of the retainer 60 exposes the electrode assembly 10 to the inside of the case 15 to move the electrolyte solution, while discharging heat from the front surface 101 and the rear surface 102 and the negative current collecting lead tab 31 and the positive current collecting lead tabs 31 and 32.

Hereinafter, another exemplary embodiment will now be described, but the description of the same components will be omitted by comparing with the first exemplary embodiment and the previously described exemplary embodiment and only different components will be described.

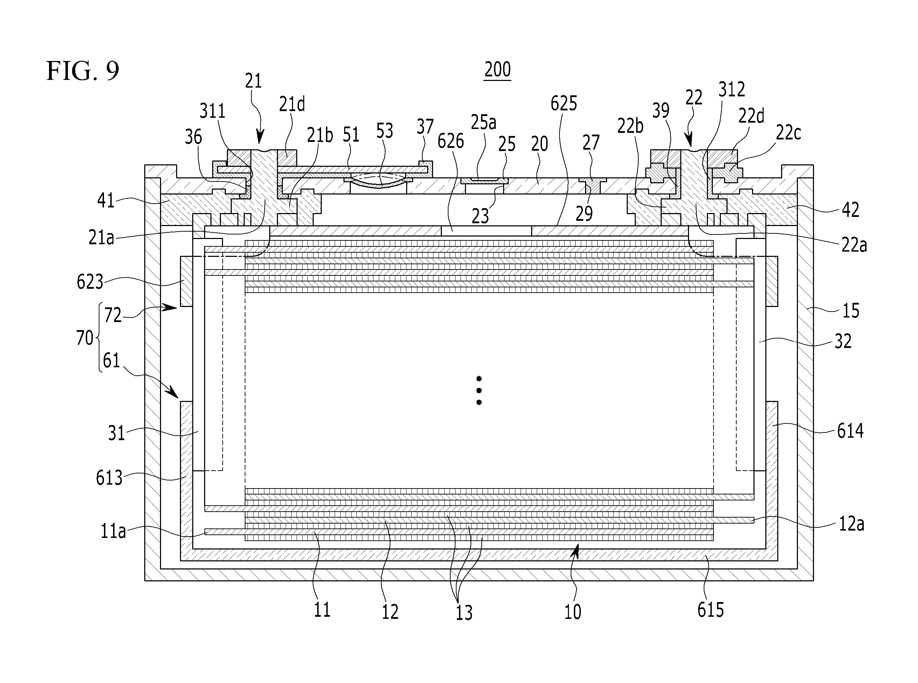

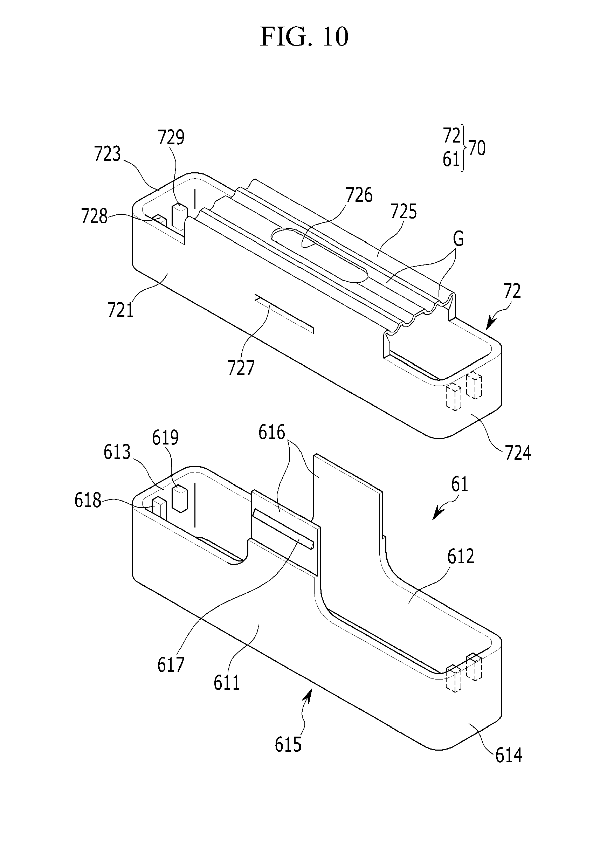

FIG. 9 is a cross-sectional view of a prismatic rechargeable battery 200 according to a second exemplary embodiment and FIG. 10 is an exploded perspective view of a retainer 70 applied to a rechargeable battery shown in FIG. 9. Referring to FIGS. 9 and 10, in the retainer 70, a through hole 726 is further provided in the lid portion 725 of the upper retainer 72.

The lid portion 725 forms a bending portion G and a through hole 726 between the cap plate 20 and the electrode assembly 10. The bending portion G and the through hole 726 further facilitate the movement of the gas generated therein to the upper portion thereof.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### Description of symbols

| | |
|---|---|
| 10 : Electrode assembly | 11 : Negative electrode |
| 11a, 12a : Non-coating portion | 12 : Positive electrode |
| 13 : Separator | 15 : Case |
| 20 : Cap plate | |
| 21 : First electrode terminal (Negative terminal) | |
| 21a, 22a : Column portion | 21b, 22b : Flange |
| 21d, 22d : Terminal plate | |
| 22 : Second electrode terminal (Positive terminal) | |
| 22c : Top plate | 24 : Vent hole |
| 25 : Vent plate | 25a : Notch |
| 27 : Sealing Closure | 29 : Electrolyte solution injection hole |
| 31 : Negative current collecting lead tab | |
| 32 : Positive current collecting lead tab | |
| 36 : Native gasket | 39 : Positive gasket |
| 41 : Negative insulating member | 42 : Positive insulating member |
| 51 : Short-circuit tab | 53 : Short-circuit member |
| 60, 70 : Retainer | 61, 62 : Lower and upper retainer |
| 63, 64, 65, 66 : First, second, third, and fourth electrode assembly bonding portion | |
| 67 : Branch portion | 100, 200 : Rechargeable battery |
| 101 : Front surface | 102 : Rear surface |
| 611, 612, 621, 622 : First, second, third, and fourth pressing portion | |
| 613, 614, 623, 624 : First, second, third, and fourth confining portion | |
| 615 : Bottom portion | 616 : Extending portion |
| 617 : Coupling protrusion | 618, 619, 628, 629 : Rib |
| 625, 725 : Lid portion | 627 : Coupling hole |
| 726 : Through hole | G : Bending portion |

## Claims

1. A prismatic rechargeable battery (100), comprising:
an electrode assembly (10);
a case (15) accommodating the electrode assembly (10); and
a retainer (60) in the case (15) and surrounding the electrode assembly, wherein the retainer (60) includes:
a first retainer (61) surrounding one portion of the electrode assembly (10),
a second retainer (62) surrounding another portion of the electrode assembly (10), and
a connecting portion connecting the first retainer (61) and the second retainer (62).

2. The prismatic rechargeable battery (100) as claimed in claim 1, further comprising a current collecting lead tab (31), the current collecting lead tab (31) electrically connecting the electrode assembly (10) with a terminal (21) of the prismatic rechargeable battery (100).

3. The prismatic rechargeable battery (100) as claimed in claim 1 or 2, wherein the first retainer (61) includes:
a bottom portion (615),
a first pressing portion (611) extending vertically from the bottom portion (615),
a second pressing portion (612) extending vertically from the bottom portion (615), the second pressing portion (612) facing the first pressing portion (611),
a first confining portion (613) extending vertically from the bottom portion (615), the first confining portion (613) being between ends of the first pressing portion (611) and the second pressing portion (12), and
a second confining portion (614) extending vertically from the bottom portion (615), the second confining portion (614) facing the first confining portion (613).

4. The prismatic rechargeable battery (100) as claimed in any one of the preceding claims, wherein the second retainer (62) includes:
a lid portion (625), the lid portion (625) supporting an upper end of the electrode assembly (10),
a third pressing portion (621) extending vertically from the lid portion (625),
a fourth pressing portion (622) extending vertically from the lid portion (625), the fourth pressing portion (622) facing the third pressing portion (621),
a third confining portion (623) extending vertically from the lid portion (625), the third confining portion (623) being between ends of the third pressing portion (621) and the fourth pressing portion (622), and
a fourth confining portion (624) extending vertically from the lid portion (625), the fourth confining portion (624) facing the third confining portion (623).

5. The prismatic rechargeable battery (100) as claimed in claim 4, further comprising a cap plate (20), the cap plate (20) being coupled to an upper end of the case (15) to seal the case (15), wherein the lid portion (625) of the second retainer (62) includes a bending portion (G) between the cap plate (20) and the electrode assembly (10).

6. The prismatic rechargeable battery (100) as claimed in claim 5, wherein the bending portion (G) of the second retainer (62) has a semicircular corrugated structure.

7. The prismatic rechargeable battery (100) as claimed in any one of claims 4 to 6, wherein:
the lid portion (625) of the second retainer (62) further includes a through hole (726) therein,
the cap plate (20) includes a vent plate (25), and
the vent plate (25) is above the through hole (726) of the lid portion (625).

8. The prismatic rechargeable battery (100) as claimed in any one of the preceding claims, wherein the connecting portion extends across a space between the first (61) and second (62) retainers and/or wherein the connecting portion is integrally formed with one of the first retainer (61) and the second (62) retainer.

9. The prismatic rechargeable battery (100) as claimed in any one of the preceding claims, further comprising a detachable coupling between the connecting portion and at least one of the first (61) and second (62) retainers.

10. The prismatic rechargeable battery (100) as claimed in claim 9, wherein the detachable coupling includes a coupling hole (627) and a coupling protrusion (617).

11. The prismatic rechargeable battery (100) as claimed in any one of the claims 5 - 10, wherein the bending portion (G) of the lid portion (625) contacts the coated portion of the electrode assembly (10).

12. The prismatic rechargeable battery (100) as claimed in any of the preceding claims, wherein at least one of the first retainer (61) and the second retainer (62) includes a rib (618, 619) on an inner surface thereof.

13. The prismatic rechargeable battery (100) as claimed in claim 12, further comprising a current collecting lead tab (31), the current collecting lead tab electrically connecting the electrode assembly (10) with a terminal, and wherein the rib supports electrode assembly bonding portions (62, 64, 65, 66) of the current collecting lead tab.

14. The prismatic rechargeable battery (100) as claimed in any of the preceding claims, wherein the second retainer (62) further includes an opening portion (602) at opposite ends thereof, the opening portion exposing a portion of the electrode assembly (10).

15. The prismatic rechargeable battery (100) as claimed in any of the preceding claims, wherein the first retainer (61) is spaced apart from the second retainer (62).
